(19) Europäisches Patentamt
European Patent Office
Office européen des brevets

(11) **EP 2 028 141 A1**

(12) **EUROPEAN PATENT APPLICATION**

(43) Date of publication:
**25.02.2009 Bulletin 2009/09**

(51) Int Cl.:
*B65G 47/30* (2006.01)     *B65G 47/31* (2006.01)
*B65B 23/12* (2006.01)     *B65B 23/14* (2006.01)

(21) Application number: **08162019.7**

(22) Date of filing: **07.08.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **10.08.2007  IT VR20070116**

(71) Applicant: **SPS Italiana Pack Systems S.p.A.**
**36036 Torrebelvicino (VI) (IT)**

(72) Inventors:
• **Cerutti, Giuliano**
  **28021, Borgomanero (NO) (IT)**
• **Masini, Fabio**
  **28047, Oleggio (NO) (IT)**

(74) Representative: **Petraz, Gilberto Luigi et al**
**GLP S.r.l.**
**Piazzale Cavedalis 6/2**
**33100 Udine (IT)**

(54) **Plant and method for the jogging and formation of rows of bakery products, in particular biscuits and the like**

(57)     A plant and a method for the jogging and formation of rows of bakery products, in particular biscuits and the like, said plant comprising a series of conveyor belts (11, 12) which transfer the products to be aligned from infeed lines, said plant comprising a number of alignment or jogger units (13, 14 and 15) positioned above the consecutive conveyor belts operating at different speeds to make it possible to vary the required spacing of the rows of products on the final belt (16), allowing an increase in the density of the rows in the same amount of space with a consequent decrease in speed of the entire system.

Fig. 1

EP 2 028 141 A1

**Description**

**TECHNICAL FIELD**

This invention concerns a plant and a method for the jogging and formation of rows of bakery products, in particular biscuits and the like.

In particular, the invention refers to packaging systems in which products, essentially bakery products, such as biscuits or the like, are arranged on a first conveyor belt in rows with a substantially disordered transverse alignment and with variable longitudinal distances between these rows.

According to the invention, the rows must be transferred from this first conveyor belt to other conveyor belts in transversally ordered rows which are spaced apart longitudinally at pre-defined distances.

The invention substantially foresees an improvement in working capacity or in other words the possibility of reducing the space necessary for alignment.

This invention can be applied in the mechanics sector and more specifically in the sector of packaging machines and wrapping machines for bakery products, in particular biscuits.

**BACKGROUND ART**

Background art includes the use of packaging systems in which the products, generally food products such as biscuits or the like, are arranged on consecutive conveyor belts in order to transversally line up the products which arrive in a disorderly fashion.

According to this background art, the biscuits are arranged on a first conveyor belt in rows with a substantially disordered transverse alignment and with variable longitudinal distances between these rows which must be transferred from this first conveyor belt to a second conveyor belt in transversally ordered rows which are spaced apart longitudinally at pre-defined distances.

The term "row" indicates a line of biscuits arranged transversally with respect to the infeed direction of the conveyor belt, while the term "batch of rows" means a plurality of rows arranged parallel to each other and in a longitudinal direction on the belts.

A possible non-binding example of application of this invention is plants for packaging bakery products in the food industry. Infeed in rows takes place downstream of an oven in which food products, such as small cakes, pastries, biscuits and the like, are cooked. The products leaving the oven are arranged in irregular rows on a conveyor belt for the subsequent selection and packaging steps. Before packaging, however, the products must be lined up in orderly rows equally spaced at a predefined distance apart.

To achieve alignment in rows, as well as the required correct spacing, the products are usually infed in disorderly rows, which may have been preselected, as far as a pair of conveyor belts, with the upstream conveyor belt operating intermittently or continuously and the downstream conveyor belt usually operating continuously.

Each row of products transferred from the upstream belt to the next belt is temporarily halted by a transverse blade until the row is perfectly aligned and at a set distance from a row already present on the same downstream conveyor belt.

It is obvious that this type of solution does not permit high production speeds. This problem is even more important in cases where, due to the type and size of the products, the distance between the ordered rows of products must be considerable.

More in general, it should be pointed out that in order for these rows to be transferred to a "row distributor" (system of belts to convey the products to the packaging machines), the rows must be jogged and appropriately spaced out at a certain distance.

Thus, when leaving the oven, the products arrive in rows, a row being the line of n products at right angles to the infeed direction.

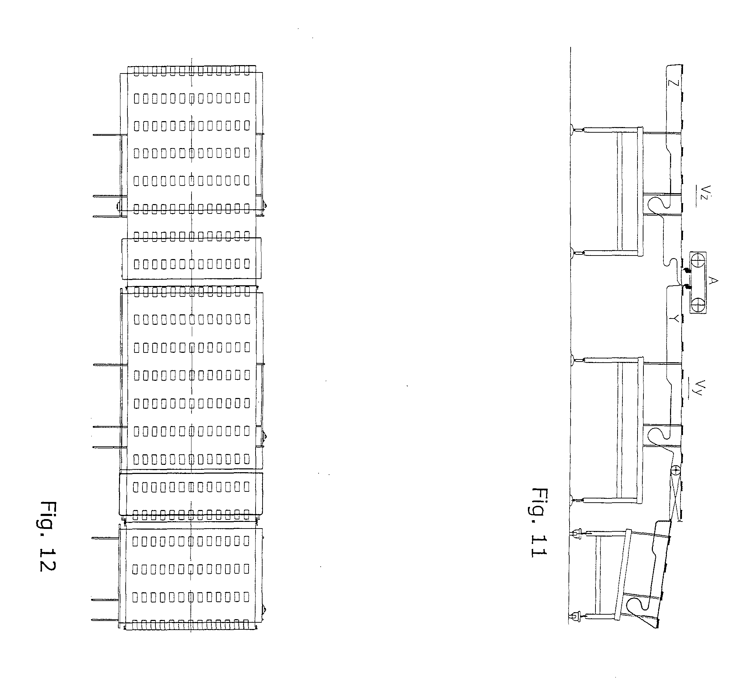

Up to this point, the rows are all merely spaced apart by a certain distance R corresponding to the following value WITHOUT JOGGERS A-B, as can be seen in figures 11 and 12:

$$T = Py \; / \; Vy = Py \; / \; N \; x \; Py = 1/N$$

where:

R = distance between batches of rows;
Py = distance between the rows where R > Py;
T = time elapsing between the passage of one row and the next;

Vy = speed of belt y;

N = NUMBER OF ROWS PER MINUTE

This functional system has proved efficient up to a non-excessive number of rows per minute.

With a production of around 150 rows per minute, a system was conceived for the formation of batches of rows to be transferred to an accumulation belt at the end of belt Y in order to decrease the speeds involved.

## DESCRIPTION OF THE INVENTION

This invention proposes to provide a plant and method for the jogging and formation of rows of bakery products, in particular biscuits and the like, which can eliminate or at least reduce the drawbacks described above.

The invention also proposes to provide a plant with a simple design and, at the same time, maximum efficiency from a production point of view, in order to be advantageous for the end user.

This is achieved by means of a plant and method for the jogging and formation of rows of bakery products, the features of which are described in the main claim.

The dependent claims describe advantageous embodiments of the invention.

The main advantages of this solution, in addition to those deriving from the construction simplicity, concern first of all the fact that it is necessary to have an amount of space R, which is predefined, in order to transfer a row or a batch of rows onto the accumulation belt.

In a situation without the creation of batches, as in known solutions, all the rows are spaced apart at a distance R.

If, instead, as in the system according to the invention, a series of batches of rows spaced R apart is created, the rows within the batches being less than R apart, then there is a greater density of rows within the same amount of overall space with a consequent decrease in speed of the entire system, benefiting smooth functioning.

The device according to the invention therefore substantially consists of a plant made up of a plurality of belts and a plurality of jogging devices, each of which is distinguished by its ability to vary the infeed pace.

The use of the plant according to the invention makes it possible to reduce the space between the rows within the batches, moving the rows closer together to a distance less than R.

This is allowed by the fact that, along the infeed line of the batches of rows, several joggers are positioned, each operating at different speeds and all synchronised by means of specific control software.

## DESCRIPTION OF THE DRAWINGS

Other features and advantages of the invention will become evident on reading the description given below of one embodiment of the invention, provided as a non-binding example, with the help of the accompanying drawings, in which:

- figure 1 represents a schematic side view of the plant according to the invention;
- figure 2 represents a schematic plan view of the plant according to the invention;

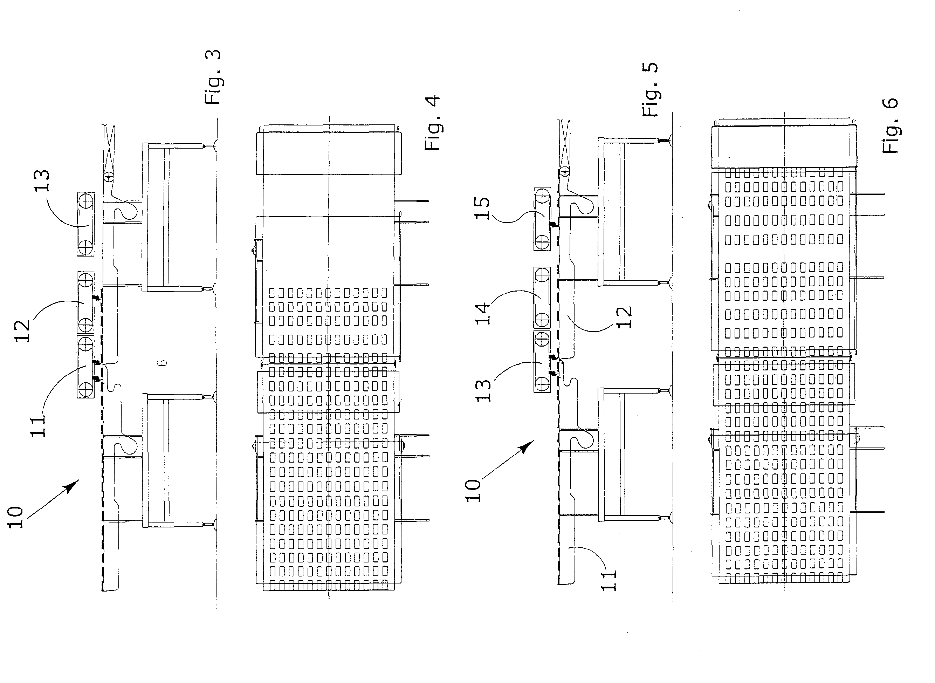

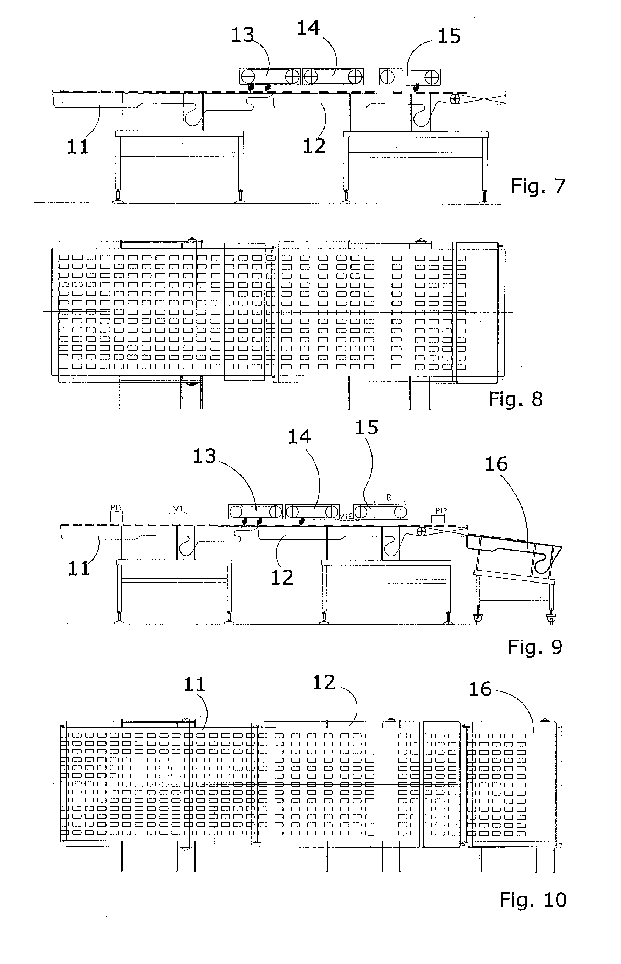

- figures 3 to 10 represent schematic side and plan views of the plant according to the invention in the various operating steps;
- figures 11 and 12 represent schematic views of a traditional type plant, constructed according to background art.

## DESCRIPTION OF ONE EMBODIMENT OF THE INVENTION

Referring to the accompanying drawings, the plant according to the invention, indicated overall with the reference number 10, substantially consists of a series of conveyor belts, some of which are indicated with the reference numbers 11 and 12, which must transfer the batches of rows to the packaging devices positioned at right angles to the belts and at regular intervals with respect to the belts.

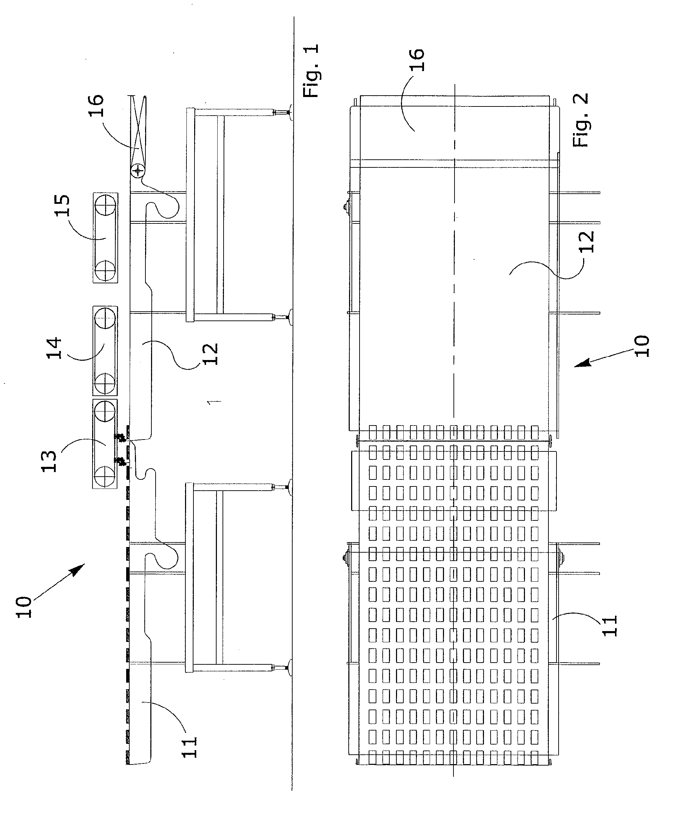

With reference first of all to figure 1, the conveyor belts 11 and 12 move continuously with respective different speeds V11 and V12, in particular the speed V12 of the belt 12 being less than the speed V11 of the belt 11.

By appropriately adjusting the speeds of the belt 11 and the belt 12, it is possible to set the required distance between consecutive rows on the belts.

To accelerate or slow down the rows of products from the belt 11 to the belt 12, the plant is equipped with alignment devices or joggers indicated with the reference numbers 13, 14 and 15, each of which forms a circuit with one or more blades.

The jogger 13 is positioned at the start of the line and works at the speed necessary to align the rows. The jogger 14 works at the speed necessary to group the batch head, slowing down two rows at different speeds.

Finally, the jogger 15 works at the speed necessary to group the batch tail, pushing two rows at different speeds.

Upstream of each alignment device, as the products pass onto the respective conveyor belt, are sensor means which detect information on the distance between the rows of adjacent products and the space occupied by each row on the belt in a longitudinal direction.

This information is transmitted in the form of signals to a control unit (not shown) which thus operates the drive motors of the blades of the joggers 13, 14 e 15.

The blades are powered according to the signals received from the sensors which have made it possible to determine the intervention conditions on each row.

In practice, to enable the alignment operation, the distance between the rows must be greater than a minimum preset distance and the longitudinal space covered by the row must be the same as or less than a preset length. These preset parameters can also be varied according to the type and size of the products to be handled.

Each blade accompanying the respective row is therefore accelerated or slowed down to at least reach a speed equal to or slightly higher than the speed of the second conveyor belt, as indicated in the subsequent figures from 4 to 10, in order to align the products in the row during their transfer from the conveyor belt 11 to the conveyor belt 12.

The plurality of jogger devices according to the invention thus makes it possible to implement a formula which has the following parameters:

cycle = infeed of the row from its first position to the position of the preceding row;
number of rows per minute = N
distance between the rows = P11 ; P12
distance between the batches of rows = R where R > P12
belt speed = V11 ; V12
belt speed 12: V12= N x P12

The following formula is thus obtained, establishing the time between one row and the next = T or T' with joggers 13-14:

$$T' = R/V12 = R/N \times P\ 12 = R/P12 \times 1/N$$

where

$$R/V12 > 1 \text{ with } T' > T$$

At a production of around 150 rows per minute, this calculation makes it possible to use a system for the formation of batches of rows to be transferred to an accumulation belt 16 at the end of belt 12 in order to reduce the speed.

To transfer a row or a batch of rows to the accumulation belt 16, a space R is necessary.

If a batch creator is not used, all the rows are at a distance of R from each other.

If, on the other hand, the system according to the invention is used, series of batches of rows are created with a distance of R between the batches but with a distance of less than R between the rows within the batches.

This makes it possible to have a greater density of rows in the same amount of space with a consequent decrease in speed in the entire system, making functioning smoother.

The invention is described above with reference to a preferred embodiment. It is nevertheless clear that the invention is susceptible to numerous variations which lie within its scope, within the framework of technical equivalents.

**Claims**

1. A plant and a method for the jogging and formation of rows of bakery products, in particular biscuits and the like, said plant comprising a series of conveyor belts (11, 12) which transfer the products to be aligned from infeed lines, **characterised in that** it comprises a number of alignment or jogger units (13, 14 and 15) positioned above the consecutive conveyor belts operating at different speeds to make it possible to vary the required spacing of the rows of products on the final belt (16), allowing an increase in the density of the rows in the same amount of space with a consequent decrease in speed of the entire system.

2. A plant and a method for the jogging and formation of rows according to the foregoing claim, **characterised in that** in order to accelerate or slow down the rows of products from the belt (11) to the belt (12), the use of a plurality of alignment or jogger devices (13, 14 and 15) is foreseen, each forming a circuit with one or more blades.

3. A plant and a method for the jogging and formation of rows according to either of the foregoing claims, **characterised in that** the jogger (13) is positioned at the start of the line and works at the speed necessary to align the rows.

4. A plant and a method for the jogging and formation of rows according to any of the foregoing claims, **characterised in that** the jogger (14) works at the speed necessary to group the batch head, slowing down two rows at different speeds.

5. A plant and a method for the jogging and formation of rows according to any of the foregoing claims, **characterised in that** the jogger (15) works at the speed necessary to group the batch tail, pushing two rows at different speeds.

6. A plant and a method for the jogging and formation of rows according to any of the foregoing claims, **characterised in that** upstream of each alignment device, as the products pass onto the respective conveyor belt, are sensor means which detect information on the distance between the rows of adjacent products and the space occupied by each row on the belt in a longitudinal direction.

7. A plant and a method for the jogging and formation of rows according to any of the foregoing claims, **characterised in that** the plurality of jogger devices according to the invention thus makes it possible to implement a formula which has the following parameters:

cycle = infeed of the row from its first position to the position of the preceding row;
number of rows per minute = N
distance between the rows = P11 ; P12
distance between the batches of rows = R where R > P12
belt speed = V11 ; V12
belt speed 12: V12= N x P12
with the following formula, which establishes the time between one row and the next = T or T' with joggers (13-14):

$$T' = R/V12 = R/N \times P\,12 = R/P12 \times 1/N$$

where R/V12> 1 with T'> T.

8. A plant and a method for the jogging and formation of rows according to any of the foregoing claims, **characterised in that** it makes it possible to create a series of batches of rows with the batches with a distance of R between the batches, but with a distance of less than R between the rows within the batches.

9. A plant and a method for the jogging and formation of rows according to any of the foregoing claims, **characterised in that** it makes it possible to have a greater density of rows in the same amount of space with a consequent decrease in speed of the entire system.

Fig. 1

Fig. 2

Fig. 3

Fig. 4

Fig. 5

Fig. 6

Fig. 7

Fig. 8

Fig. 9

Fig. 10

Fig. 11

Fig. 12

**Europäisches Patentamt**
**European Patent Office**
**Office européen des brevets**

# EUROPEAN SEARCH REPORT

Application Number

EP 08 16 2019

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (IPC) |
| Y | EP 1 300 351 A (SASIB PACKAGING SYSTEM S P A [IT] SPS ITALIANA PACK SYSTEMS S P [IT]) 9 April 2003 (2003-04-09) * paragraph [0039] * ----- | 1,3,6,8, 9 | INV. B65G47/30 B65G47/31 B65B23/12 B65B23/14 |
| Y | US 5 035 315 A (FUKUSAKI HIROAKI [JP] ET AL) 30 July 1991 (1991-07-30) * column 4, line 20 - line 57; figures 1,2 * ----- | 1,3,6,8, 9 | |

TECHNICAL FIELDS
SEARCHED (IPC)

B65G
B65B

The present search report has been drawn up for all claims

| Place of search | Date of completion of the search | Examiner |
|---|---|---|
| Munich | 8 January 2009 | Lawder, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 08 16 2019

This annex lists the patent family members relating to the patent documents cited in the above-mentioned European search report.
The members are as contained in the European Patent Office EDP file on
The European Patent Office is in no way liable for these particulars which are merely given for the purpose of information.

08-01-2009

| Patent document cited in search report | | Publication date | Patent family member(s) | | Publication date |
|---|---|---|---|---|---|
| EP 1300351 | A | 09-04-2003 | AT | 314295 T | 15-01-2006 |
| | | | DE | 60116314 T2 | 07-09-2006 |
| | | | ES | 2256192 T3 | 16-07-2006 |
| | | | US | 2003079962 A1 | 01-05-2003 |
| US 5035315 | A | 30-07-1991 | DE | 3915217 A1 | 26-07-1990 |
| | | | GB | 2227217 A | 25-07-1990 |
| | | | IT | 1231250 B | 28-11-1991 |
| | | | JP | 2054642 C | 23-05-1996 |
| | | | JP | 2188312 A | 24-07-1990 |
| | | | JP | 7080546 B | 30-08-1995 |

EPO FORM P0459

For more details about this annex : see Official Journal of the European Patent Office, No. 12/82